# EUROPÄISCHE PATENTSCHRIFT

(11) **EP 2 609 657 B1**
(45) Veröffentlichungstag und Bekanntmachung des Hinweises auf die Patenterteilung: **27.06.2018**
(21) Anmeldenummer: 11757207.3
(22) Anmeldetag: 25.08.2011
(51) Int. Cl.: H01R 13/512, H01R 13/58

(54) **KABELZUGENTLASTUNG**
CABLE STRAIN RELIEF
SYSTÈME D'ATTÉNUATION DE L'EFFORT DE TENSION SUR UN CÂBLE

(30) Priorität: 27.08.2010 DE 102010037193
(43) Veröffentlichungstag der Anmeldung: 03.07.2013
(73) Patentinhaber: Phoenix Contact GmbH & Co. KG, 32825 Blomberg (DE)
(72) Erfinder: GIEFERS, Stefan, 32760 Detmold (DE)
(74) Vertreter: Michalski Hüttermann & Partner Patentanwälte mbB
(86) Internationale Anmeldenummer: PCT/EP2011/064676
(87) Internationale Veröffentlichungsnummer: WO 2012/025605

(56) Entgegenhaltungen:
- EP-A1- 2 063 501
- EP-A2- 0 980 117
- DE-C1- 19 849 227
- DE-C1- 19 951 455
- DE-U1-202006 018 019
- US-A- 4 046 451
- US-A- 5 435 745

## Beschreibung

Die Erfindung betrifft eine Kabelzugentlastung.

Kabelzugentlastungen werden gegenwärtig in vielerlei Ausführungsformen am Markt verwendet.

Eine Vielzahl dieser Kabelzugentlastungen wird verschraubbar ausgeführt.

In einer Reihe von Anwendungsbereichen ist neben der Zugentlastung auch eine Dichtfunktion zu erfüllen, so dass die Kabelzugentlastung auch in Bereichen eingesetzt werden kann, bei denen ein Eintrag leitender Fluide oder leitender Stäube zu befürchten ist. Solche Bereiche finden sich z.B. im Anlagenbau, beim Anschluss von Photovoltaik-Anlagen oder aber in der Kraftfahrzeugtechnik.

Eine Kabelzugentlastung entsprechend dem Oberbegriff von Anspruch 1 ist aus der DE19951455 C1 bekannt.

Bekannte Kabelzugentlastungen sind mehrteilig ausgeführt, so dass die einzelnen Teile vom Benutzer zusammengeführt werden müssen. Da die einzelnen Teile lose sind, kann sich bei der Montage zum einen eine Fehlstellung ergeben, so dass die notwendige Dichtheit nicht erreicht wird, zum anderen neigen diese Kabelzugentlastungen bei äußerem Stress, wie z.B. Temperaturschwankungen und Vibrationen, dazu, sich zu lösen, so dass es zu einer Lösung der Dichtung kommt.

Dieses Problem tritt auch zu Tage, wenn lediglich eine Kabelzugentlastung für eine Vielzahl unterschiedlicher Kabel verwendet werden soll. In diesem Fall stehen sich die Forderungen nach Abdeckung eines breiten Kabelspektrums bei gleichzeitiger Dichtheit und notwendiger Zugentlastung häufig diametral entgegen.

Um diesem Dilemma zu begegnen, wurden in der Vergangenheit unterschiedliche Dichtringe beigelegt. Nachteilig hieran ist, dass zum einen eine Vielzahl von Dichtungen beigelegt werden muss, so dass der Kostenvorteil einer standardisierten Kabelzugentlastung verloren geht, zum anderen ist diese Vorgehensweise fehleranfällig, da hier jeweils die passende Dichtung für den jeweiligen Kabel-Typ herausgesucht und montiert werden muss. Sowohl die Suche als auch die Montage einer verlierbaren Dichtung sind fehleranfällig.

Es ist daher Aufgabe der Erfindung, eine Kabelzugentlastung bereitzustellen, die einen Nachteil oder mehrere Nachteile aus dem Stand der Technik in erfinderischer Weise löst.

Die Aufgabe wird gelöst durch eine Kabelzugentlastung für ein Kabel entsprechend dem Anspruch 1. Die Kabelzugentlastung weist ein Zugentlastungselement und ein Halteelement auf. Das Halteelement ist dazu vorgesehen mit einem Gegenstück verbunden zu werden. Das Zugentlastungselement und das Halteelement sind so ausgeführt, dass sie eine Einheit bilden. Das Zugentlastungselement ist kronenartig und verformbar ausgeführt. Das Gegenstück verfügt über eine geneigte Anschlagfläche, so dass bei einem Zusammenbau von Gegenstück und Einheit aus Zugentlastungselement und Halteelement eine Verformung des Zugentlastungselements bewirkt wird, so dass der Durchmesser für eine Kabeldurchführung verringert ist. In einer Fortbildung der Erfindung weist das Zugentlastungselement einen zylinderförmigen, elastischen Einsatz auf.

In noch einer weiteren Ausführungsform der Erfindung weist das Zugentlastungselement eine Anschlagfläche auf, dergestalt, dass im montierten Zustand eine Abdichtung erreicht wird.

In noch einer weiteren Fortbildung der Erfindung weist das Halteelement und das Zugentlastungselement Rastelemente auf, so dass das Halteelement und das Zugentlastungselement rastend verbindbar sind.

In einer weiteren Fortbildung der Erfindung bilden das Halteelement und das Zugentlastungselement eine Einheit. Erfindungsgemäß ist das Halteelement eine Überwurfmutter.

Die Aufgabe wird weiterhin gelöst durch ein Steckerset, welches eine zuvor bezeichnete Kabelzugentlastung und ein Gegenstück aufweist. Das Gegenstück ist dazu vorgesehen, mit dem Halteelement der Kabelzugentlastung verbunden zu werden, wobei das Gegenstück auf ein Kabel aufschiebbar ist.

Die Aufgabe wird weiterhin gelöst durch ein Durchführungsset, welches eine zuvor bezeichnete Kabelzugentlastung und ein Gegenstück aufweist. Das Gegenstück ist dazu vorgesehen, mit dem verbunden Halteelement der Kabelzugentlastung verbunden zu werden, wobei das Gegenstück in einem Gehäuse fixiert werden kann und auf ein Kabel aufschiebbar ist.

Nachfolgend wird die Erfindung unter Bezugnahme auf die anliegenden Zeichnungen anhand bevorzugter Ausführungsformen näher erläutert.

Es zeigen
- Fig. 1: eine erfindungsgemäße Kabelzugentlastung in einem Schnitt,
- Fig. 2: eine perspektivische Darstellung einer erfindungsgemäßen Kabelzugentlastung und
- Fig. 3: eine weitere perspektivische Darstellung eines Halteelements einer erfindungsgemäße Kabelzugentlastung.

Die Figuren zeigen eine erfindungsgemäße Kabelzugentlastung. Obwohl in den Figuren eine Kabelzugentlastung an Hand eines Steckersets und seiner Teile dargestellt ist, ist dem Fachmann jederzeit offensichtlich, dass das Erfindungsprinzip in gleicher Weise auch auf Durchführungssets und seine Teile angewendet werden kann.

Eine erfindungsgemäße Kabelzugentlastung ist dazu vorgesehen, auf einem Kabel montiert zu werden.
Die Kabelzugentlastung weist hierzu ein Zugentlastungselement 20 und ein Halteelement 10 auf. Das Halteelement 10 ist dazu vorgesehen, mit einem Gegenstück 40 verbunden zu werden.

Die Verbindung kann durch Schrauben mittels eines Gewindes oder mittels eines Bajonettverschlusses oder dergleichen hergestellt werden.

Das Zugentlastungselement 20 und das Halteelement 10 sind so ausgeführt sind, dass sie eine Einheit 1 bilden. Diese Einheit 1 kann zum einen herstellungstechnisch als ein Stück realisiert sein oder aber so hergestellt sein, dass das Zugentlastungselement 20 und das Halteelement 10 zwar getrennt hergestellt sind, aber durch anschließendes Zusammenfügen unverlierbar gehalten werden und somit eine Einheit bilden.

Im Falle, dass das Zugentlastungselement 20 und das Halteelement 10 getrennt hergestellt sind, aber durch anschließendes Zusammenfügen unverlierbar gehalten werden, kann vorgesehen sein, dass das Zusammenfügen mittels Rastelementen 14, 24 realisiert wird, so dass ein einfaches Zusammenfügen bei gleichzeitiger unverlierbarer Halterung ermöglicht wird.

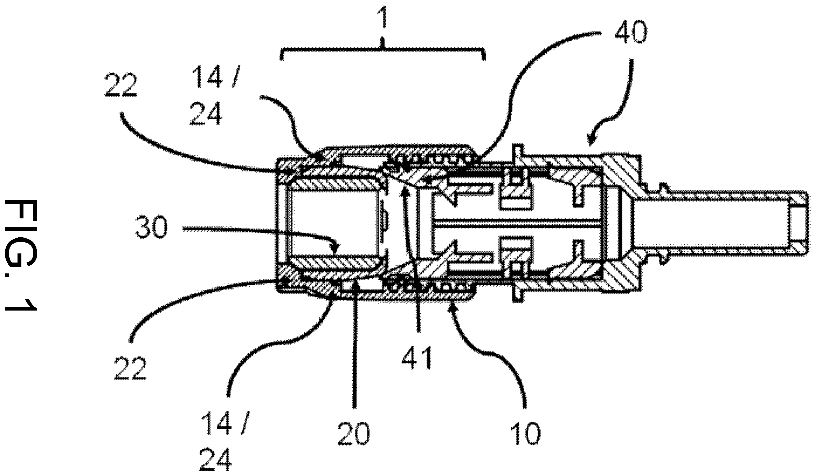

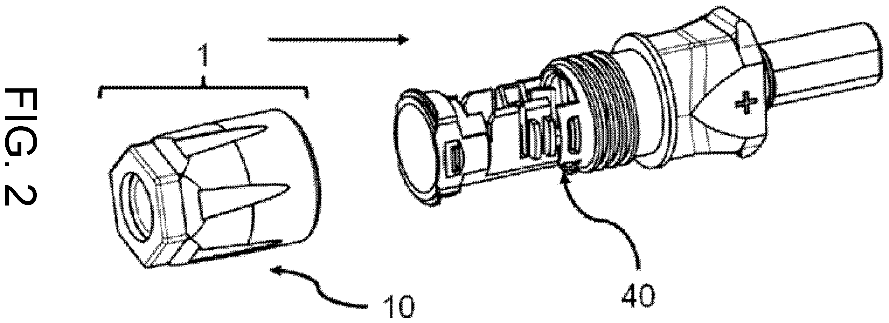

Im dargestellten Beispiel gemäß Figur 1 und 2 sind am Halteelement 10 Vertiefungen 14 ausgeformt, die entsprechende Vorsprünge 24, welche am Zugentlastungselement 20 vorgesehen sind, rastend aufnehmen können. Erfindungsgemäss ist das Zugentlastungselement 20 kronenartig ausgeführt. Durch den kronenartigen Aufbau kann die Kabelzugentlastung über einen weiten Bereich von Kabeldurchmessern eingesetzt werden. Durch die Ausrichtung des Zugentlastungselementes 20 kann zudem erreicht werden, dass ein Zug am Kabel zuverlässig aufgenommen wird, da bei dieser Ausführungsform ein verbesserter Kraftfluss ermöglicht wird.

In einer Fortbildung der Erfindung weist das Zugentlastungselement 20 einen zylinderförmigen, elastischen Einsatz 30 auf. Dieser Einsatz 30 dichtet im Wesentlichen das Kabel ab.

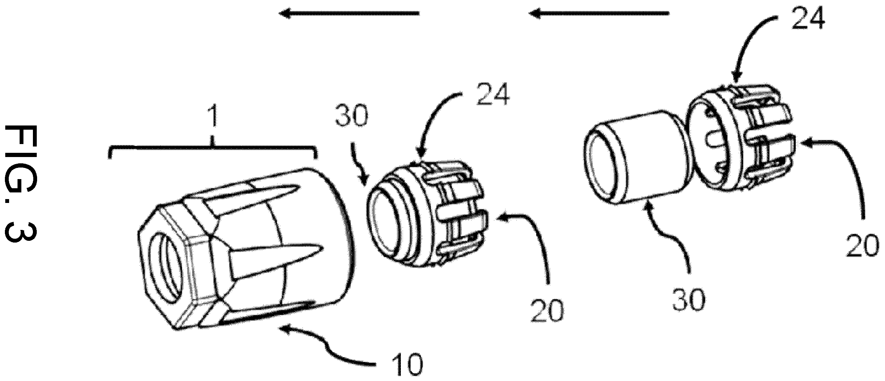

Durch die erfindungsgemäße Ausgestaltung kann erreicht werden, dass die Kabelzugentlastung über einen weiten Bereich von Kabeldurchmessern eingesetzt werden kann, ohne dass ein Wechsel von Dichtungen nötig ist. Hierdurch wird sowohl der Produktionsaufwand minimiert als auch eine erhöhte Fehlersicherheit bei der Montage ermöglicht. Dies wird dadurch ermöglicht, dass das Zugentlastungselement 20 verformbar ausgeführt ist und das Gegenstück 40 über eine geneigte Anschlagfläche 41 verfügt, so dass bei einem Zusammenbau von Gegenstück 40 und Einheit 1 ein Verformung des Zugentlastungselements 20 bewirkt wird, so dass sich der Durchmesser für eine Kabeldurchführung verringert. Die Verformung selbst kann neben einer axialen Verformung auch eine radiale Verformung aufweisen
Wird das Zugentlastungselement 20 mit dem zylinderförmigen, elastischen Einsatz 30 - wie in Figur 3 gezeigt - in das Halteelement 10 eingesetzt, so bildet dieses eine Einheit 1.

Wie bereits beschrieben kann das Zugentlastungselement 20 und das Halteelement 10 als ein Stück ausgeformt sein und so bereits herstellungstechnisch eine Einheit 1 bilden.

Alternativ kann der zylinderförmige, elastische Einsatz 30 auch in eine Einheit 1 aus Zugentlastungselement 20 und Halteelement 10 eingefügt werden.

In noch einer weiteren Ausführungsform der Erfindung weist das Zugentlastungselement 20 eine Anschlagfläche 22 auf, dergestalt, dass im montierten Zustand der Einheit eine Abdichtung erreicht wird.

Hierdurch wird der Zugangsweg von Staub und/oder Fluiden auch über diesen Weg verhindert.

Dargestellt ist das Halteelement 10 als eine Überwurfmutter. In entsprechender Weise enthält dann das Gegenstück auch ein passendes Gewinde, so dass das Zusammenwirken von Überwurfmutter und Gegenstück eine sichere Kabelzugentlastung für unterschiedliche Kabeldurchmesser zur Verfügung stellt.

Alternativ kann die Erfindung unter Ausnutzung derselben Prinzipien auch als ein Durchführungsset realisiert sein. In diesem kann natürlich dann das Gegenstück in einem Gehäuse fixiert werden.

In einer vorteilhaften Herstellungsweise sind Halteelement 10 und Gegenstück 40 aus einem thermoplastischen Material, zum Beispiel mittels Spritzgießen, hergestellt.

Auch das Zugentlastungselement 20 kann aus einem thermoplastischen Material hergestellt sein.

Alternativ können auch andere, insbesondere auch leitende Materialien verwendet werden, z.B. für den Fall, dass eine Schirmung weitergeleitet werden muss.

**Bezugszeichenliste**

| | |
|---|---|
| Einheit | 1 |
| Halteelement | 10 |
| Rastelement | 14 |
| Zugentlastungselement | 20 |
| Anschlagfläche | 22 |
| Rastelement | 24 |
| zylinderförmiger, elastischer Einsatz | 30 |
| Gegenstück | 40 |
| geneigte Anschlagfläche | 41 |

## Patentansprüche

1. Kabelzugentlastung für ein Kabel, mit einem Zugentlastungselement (20), einem Halteelement (10) und einem Gegenstück (40), wobei das Halteelement (10) dazu vorgesehen ist mit dem Gegenstück (40) verbunden zu werden, wobei das Zugentlastungselement (20) und das Halteelement (10) so ausgeführt sind, dass sie eine Einheit (1) bilden, das Halteelement (10) eine Überwurfmutter ist, und das Zugentlastungselement (20) kronenartig und verformbar ausgeführt ist, **dadurch gekennzeichnet, dass** das Gegenstück (40) über eine geneigte Anschlagfläche (41) verfügt, so dass bei einem Zusammenbau von Gegenstück (40) und Einheit aus Zugentlastungselement (20) und Halteelement (10) eine Verformung des Zugentlastungselements (20) bewirkt ist, so dass der Durchmesser für eine Kabeldurchführung verringert ist.

2. Kabelzugentlastung gemäß Anspruch 1, **dadurch gekennzeichnet, dass** das Zugentlastungselement (20) einen zylinderförmigen, elastischen Einsatz (30) aufweist.

3. Kabelzugentlastung gemäß Anspruch 1 oder 2, **dadurch gekennzeichnet, dass** das Zugentlastungselement (20) eine Anschlagfläche (22) aufweist, dergestalt, dass im montierten Zustand eine Abdichtung erreicht wird.

4. Kabelzugentlastung gemäß einem der vorhergehenden Ansprüche 1 bis 3, **dadurch gekennzeichnet, dass** das Halteelement (10) und das Zugentlastungselement (20) Rastelemente (14, 24) aufweisen, so dass das Halteelement (10) und das Zugentlastungselement (20) rastend verbindbar sind.

5. Kabelzugentlastung gemäß einem der vorhergehenden Ansprüche 1 bis 3, **dadurch gekennzeichnet, dass** das Halteelement (10) und das Zugentlastungselement (20) als ein Stück ausgeformt sind.

6. Steckerset, **gekennzeichnet durch** eine Kabelzugentlastung gemäß einem der vorhergehenden Ansprüche und ein Gegenstück (40), welches dazu vorgesehen ist, mit dem Halteelement der Kabelzugentlastung verbunden zu werden, wobei das Gegenstück (40) auf ein Kabel aufschiebbar ist.

7. Durchführungsset, **gekennzeichnet durch** eine Kabelzugentlastung gemäß einem der vorhergehenden Ansprüche 1 bis 5 und ein Gegenstück (40), welches dazu vorgesehen ist, mit dem verbunden Halteelement der Kabelzugentlastung verbunden zu werden, wobei das Gegenstück (40) in einem Gehäuse fixiert werden kann und auf ein Kabel aufschiebbar ist.

## Claims

1. A cable strain relief for a cable, having a strain relief element (20), a retaining element (10), and a counterpiece (40), wherein the retaining element (10) is intended to be connected to the counterpiece (40), wherein the strain relief element (20) and the retaining element (10) are configured such that they form a unit (1), the retaining element (10) is a cap nut, and the strain relief element (20) is crown-like and is deformable, **characterised in that** the counterpiece (40) has an inclined stop face (41), such that the strain relief element (20) is made to deform when the counterpiece (40) and unit formed of strain relief element (20) and retaining element (10) are assembled, such that the diameter for passage of a cable is reduced.

2. The cable strain relief according to claim 1, **characterised in that** the strain relief element (20) has a cylindrical, resilient insert (30).

3. The cable strain relief according to claim 1 or 2, **characterised in that** the strain relief element (20) has a stop face (22), such that a seal is achieved in the assembled state.

4. The cable strain relief according to any one of preceding claims 1 to 3, **characterised in that** the retaining element (10) and the strain relief element (20) have latching elements (14, 24), such that the retaining element (10) and the strain relief element (20) can be connected in a latching manner.

5. The cable strain relief according to any one of preceding claims 1 to 3, **characterised in that** the retaining element (10) and the strain relief element (20) are formed as one piece.

6. A plug set, **characterised by** a cable strain relief according to any one of the preceding claims and a counterpiece (40), which is designed to be connected to the retaining element of the cable strain relief, wherein the counterpiece (40) can be slid onto a cable.

7. A feedthrough set, **characterised by** a cable strain relief according to any one of preceding claims 1 to 5 and a counterpiece (40), which is designed to be connected to the connected retaining element of the cable strain relief, wherein the counterpiece (40) can be fixed in a housing and can be slid onto a cable.

## Revendications

1. Système d'atténuation de l'effort de tension sur un câble destiné à un câble, avec un élément d'atténuation de l'effort de tension (20), un élément de retenue (10) et une pièce antagoniste (40), où l'élément de retenue (10) est prévu pour être relié avec la pièce antagoniste (40), où l'élément d'atténuation de l'effort de tension (20) et l'élément de retenue (10) sont conçus de telle manière qu'ils forment une entité (1), l'élément de retenue (10) est un écrou d'accouplement et l'élément d'atténuation de l'effort de tension (20) est conçu sous la forme d'une couronne et est déformable, **caractérisé en ce que** la pièce antagoniste (40) dispose d'une surface de butée (41) inclinée, de sorte que, lors de l'assemblage de la pièce antagoniste (40) et de l'union de l'élément d'atténuation de l'effort de tension (20) et de l'élément de retenue (10), une déformation de l'élément d'atténuation de l'effort de tension (20) est provoquée, de sorte que le diamètre est diminué pour un passage de câble.

2. Système d'atténuation de l'effort de tension sur un câble selon la revendication 1, **caractérisé en ce que** l'élément d'atténuation de l'effort de tension (20) présente un pièce d'insertion (30) élastique en forme de cylindre.

3. Système d'atténuation de l'effort de tension sur un câble selon la revendication 1 ou 2, **caractérisé en ce que** l'élément d'atténuation de l'effort de tension (20) présente une surface de butée (22) conçue de telle manière qu'on atteint une étanchéité à l'état monté.

4. Système d'atténuation de l'effort de tension sur un câble selon l'une des revendications précédentes 1 à 3, **caractérisé en ce que** l'élément de retenue (10) et l'élément d'atténuation de l'effort de tension (20) présentent des éléments de verrouillage (14, 24), de sorte que l'élément de retenue (10) et l'élément d'atténuation de l'effort de tension (20) peuvent être reliés verrouillés.

5. Système d'atténuation de l'effort de tension sur un câble selon l'une des revendications précédentes 1 à 3, **caractérisé en ce que** l'élément de retenue (10) et l'élément d'atténuation de l'effort de tension (20) sont conçus d'un seul tenant.

6. Ensemble de connexion, **caractérisé par** un système d'atténuation de l'effort de tension sur un câble selon l'une des revendications précédentes et une pièce antagoniste (40), laquelle est prévue pour être reliée avec l'élément de retenue du système d'atténuation de l'effort de tension sur un câble, où la pièce antagoniste (40) peut être coulissée sur un câble.

7. Ensemble de passage **caractérisé par** un système d'atténuation de l'effort de tension sur un câble selon l'une des revendications précédentes 1 à 5 et une pièce antagoniste (40), laquelle est prévue pour être reliée avec l'élément de retenue relié du système d'atténuation de l'effort de tension sur un câble, où la pièce antagoniste (40) peut être fixée dans un boîtier et peut être coulissée sur un câble.
